# EUROPÄISCHE PATENTSCHRIFT

(11) **EP 1 812 810 B1**
(45) Veröffentlichungstag und Bekanntmachung des Hinweises auf die Patenterteilung: **01.01.2020**
(21) Anmeldenummer: 05815835.3
(22) Anmeldetag: 04.11.2005
(51) Int. Cl.: G01S 17/02, G01S 17/42, G01S 17/88, G01C 1/00

(54) **VERFAHREN ZUR BESTIMMUNG DER AUSRICHTUNG EINES AUSRICHTUNGSINDIKATORS**
METHOD FOR THE DETERMINATION OF THE ORIENTATION OF AN ORIENTATIONINDICATOR
PROCÉDÉ POUR LA DÉTERMINATION DE L'ORIENTATION D'UN OUTIL D'ORIENTATION

(30) Priorität: 19.11.2004 EP 04027500
(43) Veröffentlichungstag der Anmeldung: 01.08.2007
(73) Patentinhaber: Leica Geosystems AG, 9435 Heerbrugg (CH)
(72) Erfinder: KIRSCHNER, Holger, CH-9435 Heerbrugg (CH)
(74) Vertreter: Kaminski Harmann
(86) Internationale Anmeldenummer: PCT/EP2005/055756
(87) Internationale Veröffentlichungsnummer: WO 2006/053837

(56) Entgegenhaltungen:
- EP-A- 1 024 343
- EP-A- 1 081 459
- EP-B- 0 880 674
- WO-A-91/16598
- WO-A-03/062744
- CH-A- 676 042
- US-B1- 6 667 798

## Beschreibung

Die Erfindung bezieht sich auf ein Verfahren zur Bestimmung der Ausrichtung eines Ausrichtungsindikators gemäss dem Oberbegriff des Anspruchs 1, sowie einen Ausrichtungsindikator gemäss dem Oberbegriff des Anspruchs 9, sowie die Verwendung des Verfahrens und die Verwendung des Ausrichtungsindikators.

Die Kenntnis der Ausrichtung einer Anordnung ist für viele Anwendungen wichtig, wie z.B. im Vermessungswesen bei der Messung eines Abstands zu einem Zielpunkt über einen eventuell nicht senkrecht über dem Zielpunkt stehenden Reflektorstock, in der Luft- und Raumfahrt beim Andocken von Flugzeugen, beispielsweise zur Betankung, oder in der automatischen Maschinensteuerung zur Überwachung des Verlaufs einer neugebauten Strasse. In diesen Bereichen wird die räumliche Lage eines Zielpunkts häufig mit optischen Messinstrumenten, wie Theodoliten, Kameras oder Laserdistanzmessern, bestimmt. Oft wird zum Zweck der Messung am Zielpunkt ein Tastwerkzeug mit lichtemittierenden und/oder licht-reflektierenden Punkten positioniert.

So offenbart die WO 91/16598 ein System zum Bestimmen der Beschaffenheit einer Fläche, welches sich aus wenigstens zwei opto-elektronischen Sensoren und einem Werkzeug zusammensetzt, welches Werkzeug mit wenigstens zwei Lichtquellen und drei Kontaktpunkten oder einer Kontaktfläche ausgestattet ist. Das Werkzeug wird vermittels der Kontaktpunkte an einer Fläche befestigt, und die Orientierung der Fläche wird über die Messung der Raumkoordinaten der Lichtquellen und deren bekannte Position relativ zu den Kontaktpunkten bestimmt. Ein solches Werkzeug zur Ausrichtungsbestimmung erfordert aber eine Stromversorgung am Zielort, die an schwer zugänglichen Zielen oft nicht bereitgestellt werden kann.

In der EP 0 880 674 ist ein Verfahren offenbart, vermittels welchem über eine Kombination von Laserabstandsmessung und Photogrammetrietechnik die Raumkoordinaten von Zielpunkten bestimmt werden. Dabei wird ein Berührungswerkzeug mit mehreren Reflexionspunkten an einem Zielpunkt positioniert. Ein Laser-Bereichsfinder misst den Abstand zu einem oder mehreren Reflexionspunkten, und eine Kamera nimmt das Bild der Reflexionspunkte auf. Auf der Kamera ist als Zielbeleuchtung eine Blitzlichtlampe zum Beleuchten der Reflexionspunkte angebracht. Aus dem Bild der Reflexionspunkte auf dem Kamerasensor werden die Position und Ausrichtung des Berührungswerkzeugs berechnet. Das System ist vor allem für Messungen auf geringe Entfernungen, besonders für die Fahrzeug- und Flugzeugindustrie, optimiert, da mit einer Blitzlichtlampe beleuchtet wird, die eine geringe Beleuchtungs-Reichweite - und damit geringe Reichweite der Messung - aufweist. Zudem wird bei einer Messung auf grosse Distanzen die Abstandsmessung schwierig bis unmöglich, da mehrere Reflexionspunkte ins Gesichtsfeld des EDM geraten. Weiters unterliegt das Verfahren bei Verwendung von Reflektoren als Messpunkte der Kamera - und nicht aktiv Strahlung emittierenden Messpunkten - aufgrund der fehlenden Einkopplung der Zielbeleuchtung auf die optische Achse der Kamera Messfehlern. Dabei ist der Fehler in der Positionsbestimmung der Messpunkte von derselben Grössenordnung wie der Abstand des Zielbeleuchters von der optischen Achse der Kamera. Für geodätisch relevante Messgenauigkeiten ist das Verfahren ohne aktiv leuchtende Messpunkte somit nicht geeignet.

Die Aufgabe der vorliegenden Erfindung besteht daher darin, Mängel des Standes der Technik zu beheben und ein Verfahren bereitzustellen, vermittels welchem die Ausrichtung und/oder Position eines Ausrichtungsindikators auch auf geodätisch relevante Entfernungen mit der gattungsgemäss erforderlichen Genauigkeit bestimmt werden kann, was unter Anderem die Bestimmung der Position eines nicht direkt einsehbaren Zielpunktes, sowie die automatische Steuerung von Fahrzeugen, wie z.B. Baumaschinen, ermöglicht.

Eine weitere Aufgabe der Erfindung ist es, einen Ausrichtungsindikator mit reflektiven Bereichen bereitzustellen, der so ausgebildet ist, dass er an einem Zielpunkt positioniert und seine Ausrichtung mit einem Messgerät, insbesondere einem Tachymeter, in kurzer Zeit und auf grosse Entfernungen sehr genau bestimmt werden kann.

Diese Aufgaben werden durch die Gegenstände des Anspruchs 1 bzw. 9 oder der abhängigen Ansprüche gelöst bzw. die Lösungen weitergebildet.

Bei einem erfindungsgemässen Verfahren zur Bestimmung der Ausrichtung und/oder Position eines Ausrichtungsindikators wird ein Messgerät verwendet, welches eine Abstandsmess-Sensorik und eine Bilderfassungssensorik aufweist, insbesondere ein Tachymeter oder ein Zielfernrohr mit integriertem Abstandmesser und integrierter Kamera. Vorzugsweise sind die Abstandsmessensorik, die Bilderfassungssensorik, sowie die Messstrahlen für die Zielbeleuchtung koaxial ausgeführt, d.h. die optischen Achsen von Abstandsmess- und Bilderfassungssensorik und die zentralen Strahlen der Messstrahlenbündel liegen ausserhalb des Messgeräts in guter Näherung auf einer Achse.

Als Ausrichtungsindikator ist eine Anordnung vorgesehen, welche wenigstens drei reflektive Bereiche umfasst und an einem Zielpunkt positioniert und/oder befestigt werden kann. Mittels des Messgeräts erfolgen eine Bilderfassung der wenigstens drei reflektiven Bereiche und eine Abstandsmessung zu einem reflektiven Bereich. Der zur Abstandsmessung verwendete Bereich ist - unabhängig von der relativen Lage der Bereiche zueinander - von den anderen Bereichen unterscheidbar ausgebildet. Die Unterscheidbarkeit kann z.B. mittels der geometrischen Form oder spektralen Eigenschaften des Bereichs erreicht werden. Die Anordnung kann auch mehr als drei reflektive Bereiche umfassen. Unter reflektivem Bereich ist ein Bereich zu verstehen, welcher von einer Strahlungsquelle ausgesandte und auf den Bereich auftreffende Strahlung zurückwirft. Natürlich sollte der Bereich Strahlung in der Art reflektieren, dass die Strahlung zu einem Detektor gelangt. Vorzugsweise werden Retroreflektoren als reflektive Bereiche eingesetzt. Es können aber sowohl Strahlung ungerichtet, als auch gerichtet reflektierende Reflektoren bzw. eine Kombination von beiden verwendet werden.

Die reflektiven Bereiche stehen in einer bekannten geometrischen Beziehung zueinander und sind in einer Weise angeordnet, dass sie vermittels der Bilderfassungssensorik gleichzeitig aufgelöst werden können. Besonders vorteilhaft ist eine nicht kollineare Anordnung der reflektiven Bereiche, insbesondere sollten die reflektiven Bereiche auf einer Ziellinie vom Messgerät zum Ausrichtungsindikator so angeordnet sein, dass sie sich nicht gegenseitig vollständig verdecken. Die Erfüllung dieser Anforderung ist naturgemäss von der Ausrichtung des Ausrichtungsindikators und dessen Orientierung gegenüber der Bilderfassungssensorik abhängig. Sind mehr als drei Reflektoren vorgesehen, wird es im Allgemeinen kein Problem darstellen, diese nicht-kollinear in einer Art und Weise anzuordnen, dass sich in keiner Stellung bzw. Orientierung der Anordnung alle reflektiven Bereiche gegenseitig verdecken. Eine grosse Zahl von reflektiven Bereichen erhöht jedoch die Komplexität, da zur Identifizierung des individuellen Bereichs eine Unterscheidbarkeit von den anderen Bereichen erforderlich ist. Zudem muss die Auflösbarkeit im Bild der Bilderfassungssensorik gewährleistet bleiben, so dass eine beliebige Erhöhung der Zahl von reflektiven Bereichen zwar die Erfassbarkeit von mindestens drei Bereichen gewährleistet, jedoch auch gleichzeitig komplexitätserhöhenden Aufwand bedingt. Die Wahl von Form und Anordnung der reflektiven Bereiche muß daher den beiden widersprechenden Anforderungen Rechnung tragen.

Vom Messgerät aus findet eine gerichtete Emission von Strahlung statt, welche auf die reflektiven Bereiche des Ausrichtungsindikators gerichtet wird und von diesen reflektiven Bereichen reflektiert und/oder gestreut wird und als reflektierte und/oder gestreute Strahlung von den Sensoren im Messgerät erfasst wird. Als Strahlungsemitter wird vorzugsweise ein Laser eingesetzt. Die Sensorik für die elektronische Abstandsmessung und die Bilderfassungssensorik werden koaxial ausgeführt, d.h. die optischen Achsen derselben liegen ausserhalb des Messgeräts in guter Näherung auf einer Achse. Die Strahlungsemitter für die Abstandsmessung und Bilderfassung bzw. Richtungsmessung werden so eingekoppelt, dass deren virtuelle Bilder geräteextern betrachtet ebenfalls auf dieser Achse liegen, sodass eine koaxiale Zielbeleuchtung für die Abstandsmessung und Bilderfassung stattfindet. Mit koaxialen Strahlungsemittern/Zielbeleuchtern sind Messgenauigkeiten erreichbar, die - beispielsweise - geodätischen Anforderungen genügen. Insbesondere nachdem in vielen Anwendungsbereichen der Geodäsie reflektive Bereiche anstelle aktiv emittierender Messpunkte eingesetzt werden, sind zum Einhalten der gattungsgemässen Messgenauigkeiten Präzisions-Messgeräte gefordert. Für Abstandsmess- und Bilderfassungs-Empfänger, deren Gesichtsfeld definiert verändert werden kann, wie das beispielsweise bei Tachymetern der Fall ist, und koaxiale Zielbeleuchter erfolgt eine Ausrichtung des Zielbeleuchters auf das aktuelle Gesichtsfeld des Empfängers. Indem die emittierte Strahlung auf das Gesichtsfeld des Empfängers konzentriert wird, ist mittels der auf das Empfängergesichtsfeld ausgerichteten Zielbeleuchtung eine - im Vergleich zu einer nicht angepassten Zielbeleuchtung - grössere Reichweite der Messung bei reduziertem Leistungsbedarf erzielbar.

Abstandsmessung und Bilderfassung werden gleichzeitig durchgeführt, dabei erfolgen die Abstandsmessung zu einem reflektiven Bereich und die Bilderfassung von wenigstens drei reflektiven Bereichen. Es können aber auch Bilder von mehr als drei reflektiven Bereichen erfasst werden. Zum Beispiel könnten auch vier reflektive Bereiche vorgesehen werden, wobei die Abstandsmessung zu einem ersten reflektiven Bereich und die Bilderfassung und/oder Richtungsmessung zu einem zweiten, dritten und vierten Bereich erfolgen könnte. Zur besseren Trennung von Abstandsmessung und Bilderfassung werden vom Messgerät zwei unterschiedliche Strahlenbündel emittiert, und zwar ein erstes kollimiertes Strahlenbündel und ein zweites divergentes Strahlenbündel. Die beiden Strahlenbündel unterscheiden sich zusätzlich in Wellenlänge oder Polarisation, oder in Wellenlänge und Polarisation. Dabei weist das divergente Strahlenbündel vorzugsweise eine Divergenz auf, die für typische geodätische Anwendungen dem Gesichtsfeld der Bilderfassungssensorik entspricht und grösser als das Gesichtsfeld der Abstandsmessensorik ist. Die dafür notwendige vergleichsweise geringe Divergenz der Zielbeleuchtung ermöglicht eine grosse Reichweite des Verfahrens ohne Überschreitung der Lasersicherheitsvorschriften. Unter kollimiertem Strahlenbündel wird ein Strahlenbündel mit einem gattungsgemäss kleinen Öffnungswinkel, wie z.B. 0.5°, verstanden.

Bei Messungen auf weite Entfernungen ist es möglich, dass mehr als nur ein reflektiver Bereich ins Gesichtsfeld der Abstandsmessensorik gerät, und die Abstandsmessung dadurch nicht korrekt bzw. nicht selektiv durchgeführt werden kann. Es ist deshalb oft zweckmässig, den reflektiven Bereichen Filter zuzuordnen bzw. Filter in den optischen Strahlengang einzubringen. Diese Zuordnung erfolgt durch Einbringen des bzw. der Filter in den Strahlengang vom Sensor zum Ausrichtungsindikator, beispielsweise anhand von den reflektiven Bereichen vorgeschalteten oder an den reflektiven Bereichen angebrachten Filtern, genauso können aber auch die reflektiven Bereiche selbst aus Filter-Material gefertigt werden bzw. dieses aufweisen, oder aber die Sensoren mit Filtern ausgestattet werden. Als Filter werden vorzugsweise Spektral- oder Polarisationsfilter verwendet, z.B. ist die Verwendung von Interferenz- und/oder Absorptionsfiltern, möglich. Zusätzlich werden die reflektiven Bereiche bevorzugt unterschiedlich gross ausgebildet, dadurch wird auch eine bessere Unterscheidung der verschiedenen reflektiven Bereiche in der Abbildung auf dem Bildsensor möglich. Im Allgemeinen wird der Retroreflektor, zu welchem die Abstandsmessung erfolgt, grösser ausgebildet als die anderen Reflektoren. Mit derartigen, unabhängig von ihrer Relativlage unterscheidbaren reflektiven Bereichen ist der Ausrichtungsindikator insbesondere für Überkopfmessungen geeignet.

Die reflektiven Bereiche können unterschiedlich geformt und ausgebildet sein. Ein besonders grosser Winkelmessbereich ergibt sich für als Rundumreflektoren ausgebildete reflektive Bereiche, wie kugelförmige 4π-Reflektoren. Auch können zylinder- oder kugelförmige 360°-Reflektoren reflektive Bereiche darstellen. Eine andere Möglichkeit ist, die reflektiven Bereiche als Prismen, insbesondere Tripelprismen, auszubilden. Es können aber auch polierte Stahlelemente, verspiegelte Glaselemente, mit Reflektorfolie umhüllte Elemente, oder aus reflektivem Material ausgebildete Elemente, insbesondere Kugeln, eingesetzt werden. Reflektorfolie ist als reflektives Material leicht erhältlich, präzisere Messungen gewährleisten Reflektoren, die aus Tripelprismen oder Mikrolinsen gebildet sind, z.B. sogenannte "Katzenaugen"-Reflektoren.

Die reflektiven Bereiche werden im Allgemeinen über eine Verbindungseinheit - z.B. ein Gestänge - miteinander verbunden. Die Anordnung kann beliebig, beispielsweise sternförmig oder dreieckförmig sein, unter der Voraussetzung, dass die reflektiven Bereiche in jeder messtechnisch relevanten Stellung der Anordnung auf dem Bildsensor getrennt wahrgenommen werden können. Die - gegebenenfalls miteinander verbundenen - reflektiven Bereiche werden oftmals an einem weiteren Element detektierbarer Geometrie, im Folgenden Reflektorträger genannt, befestigt. Das kann z.B. ein Reflektorstock sein, welcher zu Vermessungszwecken an einem Zielpunkt platziert wird. Die Befestigung kann so erfolgen, dass sich der Schwerpunkt der Anordnung im Schwerpunkt des Reflektorträgers befindet, was für praktische Einsätze oft günstig ist, die Befestigung kann aber je nach Einsatzgebiet variiert werden. Wird der Reflektorträger zum Zweck einer Abstands- und/oder Positionsbestimmung eines Zielpunktes an diesem Zielpunkt positioniert, so kann über die Abstandsbestimmung zu einem reflektiven Bereich am Reflektorträger und die Bestimmung der räumlichen Lage bzw. der Raumrichtungen zu diesem und wenigstens zwei weiteren reflektiven Bereichen am Reflektorträger, sowie über die bekannten geometrischen Beziehungen zwischen den reflektiven Bereichen untereinander und zwischen den reflektiven Bereichen und dem Reflektorträger die Ausrichtung des Reflektorträgers und damit der Abstand bzw. die Position des Zielpunktes mit sehr hoher Genauigkeit bestimmt werden. Die Notwendigkeit der - oftmals fehlerbehafteten und hinsichtlich Handhabung aufwendigen - Horizontierung des Reflektorträgers entfällt. Vermittels dieser Methode können auch Abstände bzw. Positionen von Zielpunkten bestimmt werden, die vom Messgerät nicht direkt einsehbar sind - sogenannte "hidden points" -, wie z.B. von Punkten in Abwasserschächten, z.B. indem man den Reflektorträger darin platziert, oder indem man mit z.B. einem Entfernungsmesser, an welchem ein Ausrichtungsindikator angebracht ist, in den Schacht hineinmisst.

Die Abstandsmessung erfolgt im Allgemeinen anhand einer Laserdistanzmessung, die Bestimmung der Ausrichtung im Allgemeinen anhand einer Bilderfassung. Beispielsweise werden von den reflektiven Bereichen virtuelle Bilder des Zielbeleuchters erzeugt, auf einen Bildsensor abgebildet, und aus deren Positionen die Raumrichtungen zu den reflektiven Bereichen bestimmt. Der Bildsensor kann beispielsweise ein CCD-Flächensensor oder eine Kamera sein.

Eine weitere mögliche Anwendung des erfindungsgemässen Ausrichtungs-Bestimmungs-Verfahrens, bzw. des erfindungsgemässen Ausrichtungsindikators, ergibt sich in der automatischen Maschinensteuerung. Der Ausrichtungsindikator wird an z.B. einer Baumaschine angebracht, und über die Bestimmung der Ausrichtung des Ausrichtungsindikators zu jedem Zeitpunkt - und damit die Bestimmung der Orientierung der Baumaschine - ist eine Überwachung z.B. einer Strassenneigung und automatische Steuerung des Fahrtwegs der Maschine möglich.

Das erfindungsgemässe Verfahren und der erfindungsgemässe Ausrichtungsindikator, sowie die erfindungsgemässe Verwendung von Verfahren und Ausrichtungsindikator werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine mögliche Messanordnung für ein erfindungsgemässes Verfahren,
- Fig. 2: ein mögliches Messgerät zur Durchführung eines erfindungsgemässen Verfahrens,
- Fig. 3: in vier Teilfiguren 3A, 3B, 3C, 3D mögliche Ausführungsbeispiele eines erfindungsgemässen Ausrichtungsindikators,
- Fig. 4: in zwei Teilfiguren 4A, 4B zwei Ausführungsbeispiele von einem Reflektorträger zugeordneten reflektiven Bereichen und deren Abbildungen,
- Fig. 5: in vier Teilfiguren 5A, 5B, 5C, 5D vier mögliche Ausführungsbeispiele eines erfindungsgemässen Ausrichtungsindikators,
- Fig. 6: eine Darstellung zur Erläuterung geodätisch relevanter Messgenauigkeiten,
- Fig. 7: eine Verwendung des erfindungsgemässen Ausrichtungsindikators zur Überwachung einer Baumaschine.
- Fig. 8: eine Darstellung zur Erläuterung von Messfehlern.

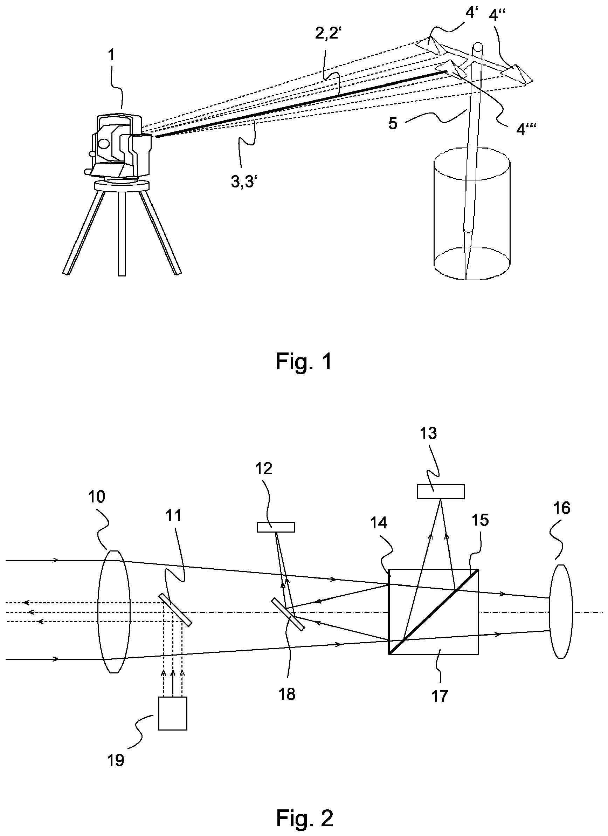

In Fig. 1 ist eine mögliche Anordnung zur Durchführung eines erfindungsgemässen Verfahrens zur Bestimmung der Ausrichtung und/oder Position eines Ausrichtungsindikators mit einem Messgerät 1 und einem Ausrichtungsindikator dargestellt. Das gezeigte Messgerät 1 kann ein Tachymeter mit einem Theodoliten und einem zu dessen optischer Achse koaxialen EDM sein, es kann genauso ein Fernrohr mit integriertem Abstandsmesser 12 und integrierter Kamera sein oder ein anderes optisches Instrument zur Abstandsmessung und Bilderfassung bzw. Richtungsbestimmung. Der Ausrichtungsindikator ist mit drei reflektiven Bereichen - z.B. drei Retroreflektoren 4',4".4''' - ausgebildet, die über Stangen miteinander verbunden und an einem Reflektorträger 5 - ein Lotstock - befestigt sind. Der mittlere Retroreflektor 4''' ist spektral unterscheidbar von den beiden anderen Reflektoren 4', 4" ausgeführt. Es versteht sich, dass genauso Kombinationen von ungerichtet mit gerichtet reflektierenden Bereichen als reflektive Bereiche eingesetzt werden können.

Die reflektiven Bereiche müssen nicht über ein Gestänge verbunden werden, sie können direkt am Reflektorträger 5 angebracht werden oder z.B. an einer am Reflektorträger 5 befestigten Halteplatte. In Fig. 1 sind die reflektiven Bereiche als Tripelprismen dargestellt. Selbstverständlich können die reflektiven Bereiche in beliebiger, dem Verwendungszweck angepasster, Form ausgebildet sein, wie z. B. als Kugeln, als Rundumreflektoren oder als zylinderförmige Reflektoren. Die durchgezogene Linie in Fig. 1 bezeichnet das kollimierte Strahlenbündel 2,2', welches zur Abstandsmessung herangezogen wird, die gestrichelten Linien deuten die Strahlen 3,3' für die Bilderfassung an. Vorzugsweise wird die Abstandsmessung mit einem Laserstrahl einer ersten Wellenlänge durchgeführt. Mit diesem Laserstrahl wird ein einzelner - zur Abstandsmessung unterscheidbar gestalteter - reflektiver Bereich 4''' genau angezielt und in bekannter Weise der Abstand zu diesem Bereich ermittelt. Der Einsatz eines kollimierten Strahlenbündels 2 ist hier für die Abstandsmessung insofern vorteilhaft, als verhindert werden soll, dass Strahlung von mehr als einem reflektiven Bereich von der Abstandsmessensorik empfangen wird, und die Messung durch überlappende reflektierte und/oder gestreute Strahlenbündel von unterschiedlichen reflektiven Bereichen verfälscht wird. Deshalb wird auch vorzugsweise für die Bilderfassung eine Strahlung mit einer von der Wellenlänge der Strahlung für die Abstandsmessung verschiedenen zweiten Wellenlänge eingesetzt. Die Strahlenbündel 3 für die Bilderfassung weisen vorzugsweise eine Divergenz auf, welche dem Gesichtsfeld der Bilderfassung entspricht, d.h. es soll eine grösstmögliche Anzahl von angestrahlten reflektiven Bereichen auf dem Bildsensor erfasst werden.

Fig. 2 zeigt einen möglichen Aufbau eines Messgeräts 1 zur Durchführung des erfindungsgemässen Verfahrens. Das Messgerät ist in diesem Beispiel als Fernrohr mit integriertem Distanzmessensor 12 und integriertem Bilderfassungssensor 13 ausgebildet. Von einer Strahlungsquelle 19 aus findet eine gerichtete Emission von Strahlung statt. Als Strahlungsquelle 19 werden vorzugsweise Laser eingesetzt. Die emittierte Strahlung wird vermittels eines ersten Reflexionselements 11 - hier als Spiegel mit einer Reflexionsschicht dargestellt - gegen einen Ausrichtungsindikator gerichtet. Von den reflektiven Bereichen des Ausrichtungsindikators zu einer Linse 10 reflektierte und/oder gestreute Strahlen werden vermittels der Linse 10 zu einem Teilerwürfel 17 mit einer dichroitischen und einer Strahlen-teildurchlässigen Schicht 14, 15 geleitet. Der Teilerwürfel 17 kann selbstverständlich durch ein anderes optisches Element mit ähnlichen optischen Eigenschaften ersetzt werden, insbesondere kann statt der teildurchlässigen Schicht auch eine zweite dichroitische Schicht verwendet werden. An der dichroitischen Schicht 14 des Teilerwürfels 17 werden die Strahlen der ersten Wellenlänge reflektiert und/oder gestreut und auf ein zweiten Reflexionselement 18 - hier ein Spiegel mit einer Reflexionsschicht - gerichtet, vermittels welchem die Strahlen aus der optischen Achse des Messgeräts ausgekoppelt und zum Abstandsmessensor 12 gelenkt werden. Die Strahlen zweiter Wellenlänge durchdringen die dichroitische Schicht 14 und werden an der zweiten für Strahlen teildurchlässigen Schicht 15 in Richtung des Bildsensors 13 ausgekoppelt. Zur Beobachtung oder in Kombination mit einer Zielmarkierung zur Anzielung können die Strahlen zu einem Okular (16) gelenkt werden.

Durch diesen Aufbau entsprechen die optische Achse des elektronischen Distanzmessers und die optische Achse der Bildsensorik in guter Näherung der Zielachse des Messgeräts. Ebenfalls auf dieser Achse liegen - aufgrund des koaxialen Aufbaus - geräteextern betrachtet die virtuellen Bilder der Emitter für die elektronische Distanzmessung und für die Bildsensorik.

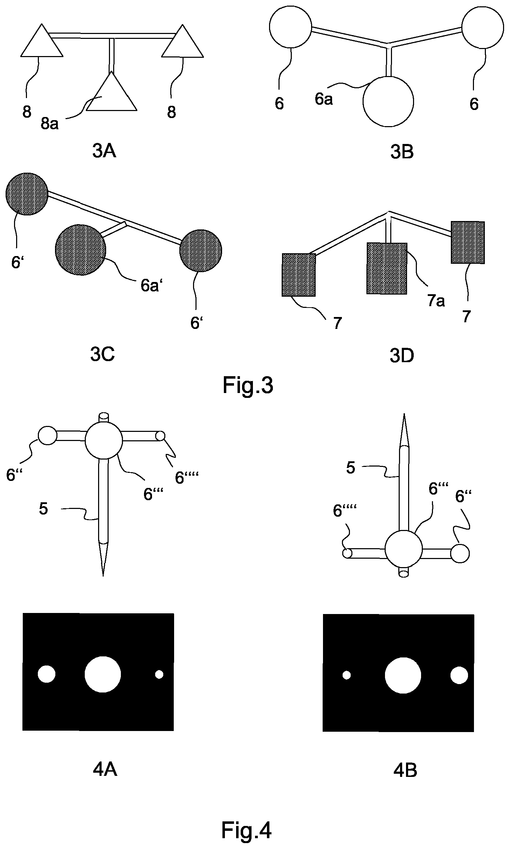

In Fig. 3 sind vier Ausführungsbeispiele eines erfindungsgemässen Ausrichtungsindikators dargestellt. Die Ausrichtungsindikatoren weisen jeweils drei reflektive Bereiche auf, wobei der mittlere Bereich jeweils als Bereich zur Abstandsmessung von den anderen Bereichen unterscheidbar ausgestaltet ist. Die Unterscheidbarkeit wird mittels der unterschiedlichen Grösse des Bereichs erreicht.

Fig. 3A zeigt einen Ausrichtungsindikator mit reflektiven Bereichen, welche hier als Tripelprismen 8,8a ausgebildet und anhand von Verbindungselementen, hier als Stangen dargestellt, miteinander verbunden sind. Fig. 3B zeigt einen Ausrichtungsindikator mit als Kugeln ausgebildeten reflektiven Bereichen 6,6a, die an einem Gestänge angebracht sind. Die reflektiven Bereiche in Fig. 3A und 3B können beispielsweise aus einem reflektiven Material gebildet sein, wie z.B. verspiegeltes Glas oder polierter Stahl, sie können aber auch mit Reflektorfolie oder einem anderen reflektiven Material umhüllt sein. In Fig. 3C ist ein Ausrichtungsindikator mit kugelförmigen Rundumreflektoren 6', 6a' als reflektive Bereiche dargestellt. Die kugelförmigen Rundumreflektoren 6', 6a' sind an einer Verbindungseinheit befestigt und aus "katzenaugenartigem" Material, d.h. aus zusammengesetzten Tripelprismen oder Mikrolinsen, ausgebildet. Fig. 3D zeigt eine Anordnung von reflektiven Bereichen aus mikrolinsen- oder tripelprismenbasiertem Material, welche einen zylinderförmigen Querschnitt haben und als 360°-Reflektoren ausgebildet sind. Die zylinderförmigen 360°-Reflektoren 7 sind so miteinander verbunden, dass sie bei einer Messung mit z.B. einem Tachymeter auf einer Ziellinie zwischen Tachymeteroptik und reflektiven Bereichen nicht hintereinander liegen und nicht alle reflektiven Bereiche denselben Abstand zum Tachymeter haben.

Fig. 4 zeigt in zwei Ausführungsbeispielen einen erfindungsgemässen Ausrichtungsindikator mit unterschiedlich grossen reflektiven Bereichen 6",6''',6'''' und deren Abbildung auf einem Bildsensor 13. Die oberen Darstellungen in den Teilfiguren 4A und 4B zeigen jeweils den erfindungsgemässen Ausrichtungsindikator mit verschieden grossen reflektiven Bereichen 6",6''',6'''', welche miteinander verbunden und an einem Reflektorträger 5 angebracht sind. Bei unterschiedlich grossen reflektiven Bereichen 6",6''',6'''' erfolgt die Abstandsmessung vorzugsweise zum grössten reflektiven Bereich. Die reflektiven Bereiche sind hier als Kugeln dargestellt, könnten aber selbstverständlich genauso als Kreise, Dreiecke, Vierecke, bzw. Prismen, Würfel, Zylinder oder andere Elemente detektierbarer Geometrie ausgebildet sein. Es ist auch nicht notwendig, dass alle reflektiven Bereiche dieselbe geometrische Form aufweisen. Es ist unter Umständen sogar vorteilhaft, reflektive Bereiche miteinander zu kombinieren, die sich in Form und/oder Grösse voneinander unterscheiden. Die Ausbildung der reflektiven Bereiche in unterschiedlichen Grössen ermöglicht eine eindeutige Identifikation der reflektiven Bereiche. Damit ist eine Unterscheidung im Wesentlichen ohne Einschränkung des Orientierungsbereichs des Ausrichtungsindikators erreichbar, im Gegensatz zu einer Unterscheidung der reflektiven Bereiche anhand deren relativer Lage zueinander - z.B. linker/rechter Bereich - die eine starke Einschränkung des möglichen Orientierungsbereichs des Ausrichtungsindikators darstellt. Der Orientierungsbereich ist der Bereich möglicher Orientierungen des Ausrichtungsindikators gegenüber dem Messgerät, welche Orientierungen eindeutige Messungen zulassen. Der anhand der Unterscheidbarkeit der Bereiche unabhängig von deren relativer Lage erweiterte Orientierungsbereich ermöglicht Messungen in einem grossen Winkelbereich, wie z.B. auch Überkopfmessungen - siehe Fig. 4B. Eine solche Überkopfmessung könnte z.B. eine Messung zu einer Zimmerdecke darstellen. Werden die reflektiven Bereiche nur anhand ihrer relativen Lage unterschieden, so erfolgt bei wenigstens einer der beiden Stellungen des Ausrichtungsindikators aus Fig. 4A, Fig. 4B eine fehlerhafte Identifikation der Bereiche.

Die unteren Darstellungen in den Teilfiguren 4A und 4B zeigen die jeweiligen Abbildungen der jeweiligen verschieden grossen reflektiven Bereiche 6",6''',6'''' aus den jeweiligen oberen Darstellungen auf einem Bildsensor 13. Es ist klar ersichtlich, dass die Abbildungen auf dem Bildsensor 13 den unterschiedlich gross ausgebildeten reflektiven Bereiche 6",6''',6'''' sofort eindeutig zugeordnet werden können.

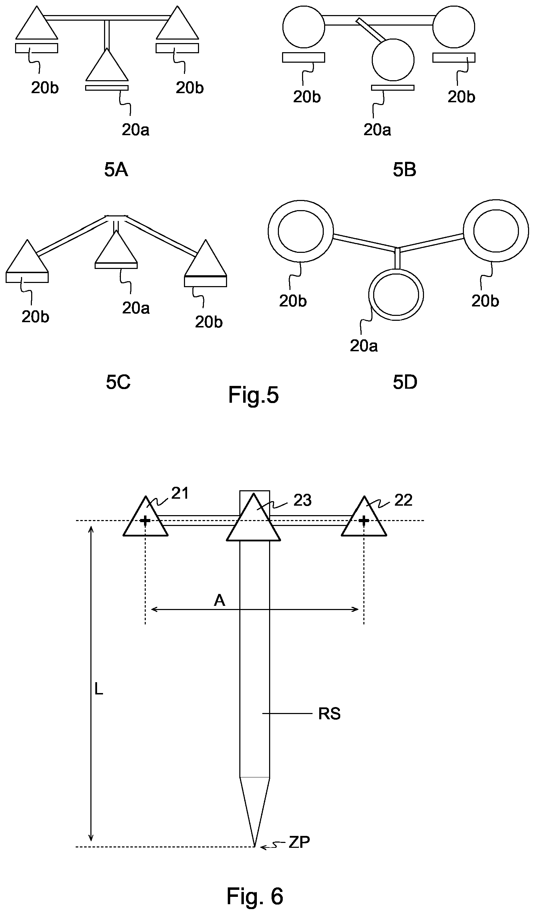

In Fig. 5 sind vier mögliche Ausführungen eines erfindungsgemässen Ausrichtungsindikators mit Filtern 20a, 20b, wie z.B. Spektral-, Polarisations-, Interferenz- oder Absorptionsfiltern, dargestellt. Dabei ist jeweils ein Filter 20a sowohl für die Strahlung der Raumrichtungsbestimmung, als auch für die Strahlung der elektronischen Abstandsmessung transparent. Zudem werden zwei Filter 20b anderen Typs verwendet, welche die Strahlung der elektronischen Distanzmessung absorbieren und/oder streuen, im Spektralbereich der Bilderfassungssensorik aber transparent sind. In den Teilfiguren 5A und 5B sind die Filter 20a, 20b den reflektiven Bereichen vorgeschaltet, in den Teilfiguren 5C und 5D sind die Filter 20a, 20b an den reflektiven Bereichen direkt angebracht. Eine weitere Möglichkeit wäre, die reflektiven Bereiche aus Filter-Material zu fertigen. Die Verwendung von Filtern 20a, 20b bzw. Filter-Materialien ist besonders für Messungen auf grosse Entfernungen vorteilhaft. Bei Messungen auf grosse Distanzen besteht nämlich die Gefahr, dass mehr als nur ein reflektiver Bereich ins Gesichtsfeld des Abstandsmessensors 12 gerät, und die Abstandsmessung dadurch verfälscht wird. Deshalb werden vorzugsweise den reflektiven Bereichen, zu welchen kein Abstand gemessen wird, Filter 20b in der Art und Weise zugeordnet, dass das zur Abstandsmessung verwendete Strahlenbündel nicht reflektiert wird. Natürlich kann auf den für beide Wellenlängen transparenten Filter 20a bei nicht zu grosser Störung durch Fremdlicht auch verzichtet werden.

In Figur 6 ist ein Ausrichtungsindikator über einem Zielpunkt ZP positioniert. Der Ausrichtungsindikator ist - mit Reflektoren - insbesondere für geodätische Anwendungen ausgebildet. Ein erster, zweiter und dritter Reflektor 21,22,23 sind an einem Reflektorstock RS angebracht, wobei der Reflektorstock RS an einem Zielpunkt ZP positioniert ist. Zum Bestimmen der Position des Zielpunktes ZP werden der Abstand zum dritten Reflektor 23 und die Raumrichtungen zum ersten, zweiten und dritten Reflektor 21,22,23 bestimmt. Aus der Abstands- und Richtungsinformation zum dritten Reflektor 23 kann die Position eines Bezugspunktes des dritten Reflektors 23 abgeleitet werden. Aus der Bezugspunkt-Position und den Raumrichtungsinformationen zum ersten und zweiten Reflektor 21,22 ist die Ausrichtung des Reflektorstocks RS und - mit der bekannten Reflektorstocklänge L - die Position des Zielpunktes ZP ableitbar. Die Bedingungen zum Erreichen gattungsgemässer Messgenauigkeiten werden im Folgenden anhand eines Zahlenbeispiels erläutert. Die Position des Zielpunktes ZP soll mit einer Genauigkeit von ±2 mm bestimmbar sein. Mit einem Ausrichtungsindikator mit einer - praxisrelevanten - Reflektorstocklänge L von 1.5 m und einer Ausdehnung A der Reflektoranordnung von 200 mm, wobei mittels des Ausrichtungsindikators Messungen zu einem Minimalabstand von 2 m durchführbar sind, ist die geforderte Messgenauigkeit nur mit einem Messgerät mit - im Wesentlichen - koaxialen Zielbeleuchtern und Empfängern (zur Abstandsmessung und Bilderfassung) erreichbar. Ist das Messgerät mit nicht koaxialem Zielbeleuchter-Empfänger-Aufbau ausgeführt, sind beispielsweise die optischen Achsen von Zielbeleuchter und Empfänger um 3 mm versetzt, so ist die Zielpunkt-Position nicht mehr mit der geforderten Genauigkeit von ±2 mm bestimmbar.

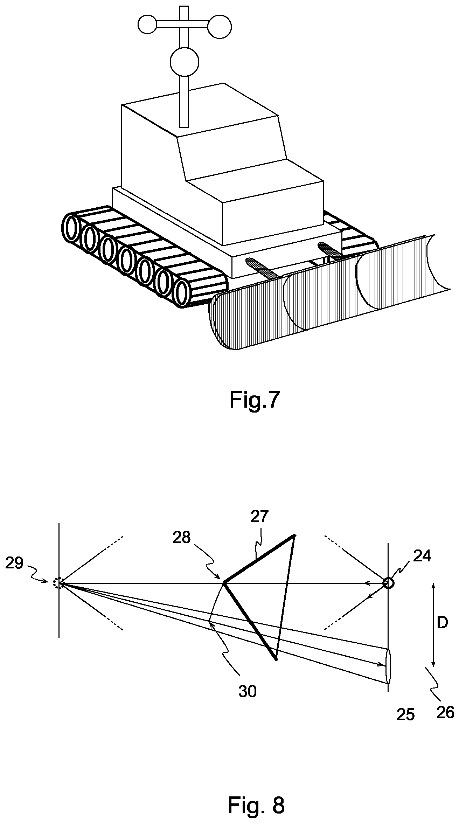

Fig. 7 zeigt eine Verwendung des Ausrichtungsindikators, bzw. des Verfahrens zur Bestimmung der Position und Ausrichtung eines Ausrichtungsindikators in der automatischen Maschinensteuerung. Ein Ausrichtungsindikator wird an z.B. einer Baumaschine befestigt. Mittels eines Messgeräts 1, beispielsweise eines Tachymeters, wird die Position und Ausrichtung des Ausrichtungsindikators und damit die Position und Ausrichtung der Maschine, an welcher der Ausrichtungsindikator befestigt ist, bestimmt. Damit sind eine Überwachung und darauf basierend auch eine automatische Steuerung der Maschine möglich. Aus dem Stand der Technik ist die Positionsbestimmung von mehreren Reflektoren, GPS-Empfängern oder Laser-Empfängern zur automatischen Maschinensteuerung bekannt. Beim erfindungsgemässen Verfahren genügt ein Ausrichtungsindikator ohne Stromversorgung auf einer Maschine und eine einmalige Messung - die gleichzeitige Messung von einem Abstand und drei Raumrichtungen - auf diesen, um die Maschine automatisch steuern zu können.

In Figur 8 ist ein optischer Aufbau zur beispielhaften Erläuterung von Messfehlern bei nicht-koaxialem Zielbeleuchter-Empfänger-Aufbau skizziert. Der optische Aufbau umfasst hier einen Zielbeleuchter 24 zur Emission von Strahlenbündeln, einen Retroreflektor 27 zur Reflexion der Strahlenbündel und einen Empfänger 25 zum Empfang der reflektierten Strahlenbündel und zum Bestimmen der Richtung zu einem Bezugspunkt 28 des Retroreflektors 27 anhand der empfangenen Strahlenbündel. Der Zielbeleuchter 24 ist im Abstand D zur optischen Achse 26 des Empfängers 25 angeordnet und emittiert Strahlenbündel, welche vom - im Gesichtsfeld des Empfängers 25 angeordneten - Retroreflektor 27 zurückreflektiert werden und - teilweise - den Empfänger 25 treffen. Die auf den Empfänger 25 auftreffenden Strahlen scheinen von einem virtuellen Bild 29 des Zielbeleuchters 24 auszugehen. Aufgrund der versetzten Anordnung von Zielbeleuchter 24 und Empfänger 25 fällt die mittels des Empfängers 25 bestimmte Richtung zum virtuellen Bild 29 des Zielbeleuchters 24 nicht mit der Richtung zum Retroreflektor 27 - bzw. zum Bezugspunkt 28 des Retroreflektors 27 zusammen. Auch bei bekanntem Abstand des Bezugspunktes 28 durch koaxiale Abstandsmessung wird anstelle des Bezugspunktes 28 ein fehlerhafter Referenzpunkt 30 registriert. Dadurch entsteht ein systematischer Messfehler - hier beispielsweise von der Grösse D/2 - in der Positionsbestimmung des Bezugspunktes 28 aufgrund der nicht koaxialen Zielbeleuchtung.

## Patentansprüche

1. Verfahren zur Bestimmung der Ausrichtung eines Ausrichtungsindikators,
mit
□ einem Messgerät (1), insbesondere einem Tachymeter, mit einer Abstandsmessensorik (12) und einer Bilderfassungssensorik (13) und
□ einem Ausrichtungsindikator, welcher mittelbar oder unmittelbar an einem Zielpunkt positionierbar ist, und welcher wenigstens drei reflektive Bereiche (4',4",4''',6,6',6",6''',6'''',7,8) aufweist, die so ausgebildet und angeordnet sind, dass sie
- in detektierbarer geometrischer Beziehung zueinander stehen, und
- vermittels der Bilderfassungssensorik (13) gleichzeitig aufgelöst werden können,
**dadurch gekennzeichnet, dass**
- ein zur Abstandsmessung verwendeter reflektiver Bereich von den anderen reflektiven Bereichen unabhängig von der relativen Lage der reflektiven Bereiche zueinander unterscheidbar ist,
□ vom Messgerät (1) zum Ausrichtungsindikator gleichzeitig eine gerichtete Emission
- eines kollimierten Strahlenbündels (2) zur Messung vermittels der Abstandsmessensorik (12) und
- eines divergenten Strahlenbündels (3) zur Erfassung vermittels der Bilderfassungssensorik (13) erfolgt, wobei sich die beiden Strahlenbündel (2,3) in Wellenlänge und/oder Polarisation unterscheiden, und
□ das von den reflektiven Bereichen reflektierte und/oder gestreute kollimierte Strahlenbündel (2') und das von den reflektiven Bereichen reflektierte und/oder gestreute divergente Strahlenbündel (3') gleichzeitig erfasst werden, wobei der Abstand vom Messgerät (1) zu wenigstens dem zur Abstandsmessung verwendeten reflektiven
Bereich (4',4",4''',6,6',6",6''',6'''',7,8) vermittels der Abstandsmessensorik (12) und die räumliche Lage der wenigstens drei reflektiven Bereiche (4',4",4''',6,6',6",6''',6'''',7,8) vermittels der Bilderfassungssensorik (13) gleichzeitig bestimmt werden, und damit die Ausrichtung des Ausrichtungsindikators festgestellt wird.

2. Verfahren nach Anspruch 1, **dadurch gekennzeichnet, dass** das divergente Strahlenbündel (3) eine Divergenz aufweist, die dem Gesichtsfeld der Bilderfassungssensorik (13) äquivalent und grösser als das Gesichtsfeld der Abstandsmessensorik (12) ist.

3. Verfahren nach Anspruch 1 oder 2, **dadurch gekennzeichnet, dass** die emittierten Strahlenbündel (2,3), die Abstandsmessensorik (12) und die Bilderfassungssensorik (13) koaxial sind.

4. Verfahren nach einem der vorangehenden Ansprüche, **dadurch gekennzeichnet, dass** der Ausrichtungsindikator an einem Zielpunkt positioniert wird, und über die Ausrichtung des Ausrichtungsindikators und dessen geometrische Beziehung zum Zielpunkt der Abstand zum Zielpunkt ermittelt wird.

5. Verfahren nach Anspruch 1, 2, oder 3, **dadurch gekennzeichnet, dass** der Abstand zu wenigstens einem reflektiven Bereich (4',4",4''',6,6',6",6''',6'''',7,8) und die Raumrichtungen zu den wenigstens drei reflektiven Bereichen (4',4",4''',6,6',6",6''',6'''',7,8) gleichzeitig bestimmt werden, und damit die Ausrichtung und Position des Ausrichtungsindikators festgestellt werden.

6. Verfahren nach Anspruch 5, **dadurch gekennzeichnet, dass** der Ausrichtungsindikator an einem Zielpunkt positioniert wird, und über die Ausrichtung und Position des Ausrichtungsindikators und dessen geometrische Beziehung zum Zielpunkt die Position des Zielpunkts ermittelt wird.

7. Verfahren nach einem der vorangehenden Ansprüche, **dadurch gekennzeichnet, dass** den reflektiven
Bereichen (4',4",4''',6,6',6'',6''',6'''',7,8) und/oder den Sensoren Filter zugeordnet werden.

8. Verfahren nach Anspruch 7, **dadurch gekennzeichnet, dass** die Messung vermittels der Abstandsmessensorik (12) zu mindestens einem reflektiven Bereich blockiert wird.

9. Ausrichtungsindikator, welcher mittelbar oder unmittelbar an einem Zielpunkt positionierbar ist,
mit
▪ wenigstens drei reflektiven
Bereichen (4',4",4',6,6',6",6''',6'''',7,8), die so ausgebildet und angeordnet sind, dass
- sie in detektierbarer geometrischer Beziehung zueinander stehen,
- sie vermittels einer Bilderfassungssensorik (13) gleichzeitig aufgelöst werden können und
- vermittels einer Abstandsmessensorik (12) gleichzeitig ein Abstand zu einem reflektiven Bereich (4',4",4''',6,6',6'',6''',6'''',7,8) gemessen werden kann,
**dadurch gekennzeichnet, dass**
▪ die reflektiven Bereiche so ausgestaltet sind, dass der zur Abstandsmessung verwendete reflektive Bereich von den anderen reflektiven Bereichen unabhängig von der relativen Lage der reflektiven Bereiche zueinander unterscheidbar ist.

10. Ausrichtungsindikator nach Anspruch 9, **dadurch gekennzeichnet, dass** wenigstens ein reflektiver Bereich (4',4",4''',6,6',6",6''',6'''',7,8) sich in seiner Grösse von den anderen reflektiven Bereichen (4',4",4''',6,6',6",6''',6'''',7,8) unterscheidet.

11. Ausrichtungsindikator nach Anspruch 9, **dadurch gekennzeichnet, dass** alle reflektiven
Bereiche (4',4",4''',6,6',6",6''',6'''',7,8) sich in ihrer Grösse voneinander unterscheiden.

12. Ausrichtungsindikator nach einem der Ansprüche 9 bis 11, **dadurch gekennzeichnet, dass** wenigstens einem reflektiven Bereich (4',4",4''',6,6',6",6''',6'''',7,8) ein Filter (20a,20b) zugeordnet, insbesondere vorgeschaltet, ist.

13. Ausrichtungsindikator nach einem der Ansprüche 9 bis 12, **dadurch gekennzeichnet, dass** wenigstens ein reflektiver Bereich (4',4",4''',6,6',6",6''',6'''',7,8) als eine der folgenden Alternativen ausgebildet ist:
- 360°-Reflektor ,
- kugelförmiger Rundumreflektor (6,6',6",6''',6''''),
- zylinderförmiger 360°-Reflektor (7),
- Tripelprisma (8).

14. Ausrichtungsindikator nach einem der Ansprüche 9 bis 13, **dadurch gekennzeichnet, dass** wenigstens ein reflektiver Bereich (4',4",4''',6,6',6",6''',6'''',7,8) wenigstens eine der folgenden Alternativen aufweist:
- Reflektorfolie,
- Tripelprismen,
- Mikrolinsen.

15. Ausrichtungsindikator nach einem der Ansprüche 9 bis 14, **dadurch gekennzeichnet, dass** die reflektiven Bereiche (4',4",4''',6,6',6",6''',6'''',7,8) vermittels einer Verbindungseinheit, insbesondere einem Gestänge, miteinander verbunden sind und beispielsweise eine sternförmige Anordnung ergeben.

16. Ausrichtungsindikator nach einem der Ansprüche 9 bis 15, **dadurch gekennzeichnet, dass** der Ausrichtungsindikator einem Reflektorträger (5), insbesondere einem Lotstock, zugeordnet ist.

17. Verwendung des Verfahrens nach Anspruch 1 bis 8 zur Abstands- und/oder Positionsbestimmung von nicht direkt einsehbaren Zielpunkten mit einem mittelbaren Positionieren des Ausrichtungsindikators am Zielpunkt.

18. Verwendung des Ausrichtungsindikators nach Anspruch 9 bis 16 zur Abstands- und/oder Positionsbestimmung von nicht direkt einsehbaren Zielpunkten mit einer mittelbaren Positionierung des Ausrichtungsindikators am Zielpunkt.

19. Verwendung des Verfahrens nach Anspruch 1 bis 8 zur automatischen Maschinensteuerung,
mit einer Bestimmung einer Ausrichtung einer zu steuernden Maschine über den daran angebrachten Ausrichtungsindikator.

20. Verwendung des Ausrichtungsindikators nach Anspruch 9 bis 16 zur automatischen Maschinensteuerung, wobei der Ausrichtungsindikator an einer zu steuernden Maschine angebracht ist.

## Claims

1. Method for determining the orientation of an orientation indicator, with
∘ a measuring instrument (1), more particularly a tachymeter, having distance measuring sensors (12) and image acquiring sensors (13) and
∘ an orientation indicator positionable indirectly or directly at a target point and having at least three reflecting segments (4', 4", 4''', 6, 6', 6", 6''', 6"", 7, 8) of such a shape and arrangement that they
- have a detectable mutual geometric relationship, and
- can be simultaneously resolved by means of image acquiring sensors (13),
**characterized in that**
∘ a reflecting segment used for distance measurement is distinguishable from the other reflecting segments independently of the relative position of the reflecting segments to one another,
∘ from the measuring instrument (1) toward the orientation indicator, one simultaneously has a directional emission
- of a collimated beam (2) for measurements by means of the distance measuring sensors (12) and
- of a divergent beam (3) for acquisition by means of the image acquiring sensors (13)
while the two beams (2, 3) differ in their wavelengths and/or polarization, and
∘ the collimated beam (2') reflected and/or scattered by the reflecting segments and the divergent beam (3') reflected and/or scattered by the reflecting segments are captured simultaneously while the distance from the measuring instrument (1) to at least the reflecting segment (4', 4", 4''', 6, 6', 6", 6''', 6"", 7, 8) used for distance measurement is determined by means of the distance measuring sensors (12), simultaneously with the determination by means of the image acquiring sensors (13), of the positions in space of the at least three reflecting segments (4', 4", 4''', 6, 6', 6", 6''', 6'''', 7, 8), and in this way the orientation of the orientation indicator is established.

2. Method according to claim 1, **characterized in that** the divergent beam (3) exhibits a divergence that is equivalent to the field of vision of the image acquiring sensors (13) and wider than the field of vision of the distance measuring sensors (12).

3. Method according to claims 1 or 2, **characterized in that** the emitted beams (2 3), the distance measuring sensors (12), and the image acquiring sensors (13) are coaxial.

4. Method according to one of the preceding claims, **characterized in that** the orientation indicator is positioned at a target point, and the distance to the target point is determined via the orientation of the orientation indicator and its geometric relationship to the target point.

5. Method according to claim 1, 2, or 3, **characterized in that** the distance to at least one reflecting segment (4', 4", 4''', 6, 6', 6", 6''', 6'''', 7, 8) and the directions in space toward the at least three reflecting segments (4', 4", 4''', 6, 6', 6", 6''', 6"", 7, 8) are determined simultaneously, and the orientation and position of the orientation indicator are thus established.

6. Method according to claim 5, **characterized in that** the orientation indicator is positioned at a target point, and the position of the target point is determined via the orientation and position of the orientation indicator and its geometric relationship with the target point.

7. Method according to one of the preceding claims, **characterized in that** filters are associated with the reflecting segments (4', 4", 4''', 6, 6', 6", 6''', 6'''', 7, 8) and/or with the sensors.

8. Method according to claim 7, **characterized in that** the measurement by means of the distance measuring sensors (12) is blocked in the direction of at least one reflecting segment.

9. Orientation indicator that can be positioned indirectly or directly at a target point, with
∘ at least three reflecting segments (4', 4", 4''', 6, 6', 6", 6''', 6'''', 7, 8) of such a shape and arrangement that they
- have a detectable mutual geometric relationship,
- can be simultaneously resolved by means of image acquiring sensors (13),
and
- by means of distance measuring sensors (12) a distance to one reflecting segment (4', 4", 4''', 6, 6', 6", 6''' 6'''', 7, 8) can be simultaneously measured,
**characterized in that**
∘ the reflecting segments have a layout such that the segment used for measuring the distance can be distinguished from the other reflecting segments regardless of the relative positions of the reflecting segments.

10. Orientation indicator according to claim 9, **characterized in that** at least one reflecting segment (4', 4", 4''', 6, 6', 6", 6''', 6'''', 7, 8) differs in its size from the other reflecting segments (4', 4", 4''', 6, 6', 6", 6''', 6'''', 7, 8).

11. Orientation indicator according to claim 9, **characterized in that** all reflecting segments (4', 4", 4''', 6, 6', 6", 6''', 6'''', 7, 8) differ from each other in their sizes.

12. Orientation indicator according to one of claims 9 to 11, **characterized in that** a filter (20a, 20b) is associated with at least one reflecting segment (4', 4", 4''', 6, 6', 6", 6"', 6"", 7, 8), and more particularly set up in front of it.

13. Orientation indicator according to one of claims 9 to 12, **characterized in that** at least one reflecting segment (4', 4", 4''', 6, 6', 6", 6''', 6'''', 7, 8) is formed as one of the following alternatives:
- 360° reflector,
- spherical all-around reflector (6, 6', 6", 6"', 6'''')
- zylindrical 360° reflector (7)
- triple prism (8).

14. Orientation indicator according to one of claims 9 to 13, **characterized in that** at least one reflecting segment (4', 4", 4''', 6, 6', 6'', 6''', 6'''', 7, 8) exhibits at least one of the following alternatives:
- reflector foil,
- triple prisms,
- microlenses.

15. Orientation indicator according to one of claims 9 to 14, **characterized in that** the reflecting segments (4', 4", 4''', 6, 6', 6", 6''', 6'''', 7, 8) are tied together by means of a connecting unit, more particularly by struts, and for instance yield a star-shaped arrangement.

16. Orientation indicator according to one of claims 9 to 15, **characterized in that** the orientation indicator is associated with a reflector support (5), more particularly a range pole.

17. Use of the method according to claims 1 to 8 for determining the distance and/or position of target points not directly visible, wherein the orientation indicator is indirectly positioned at the target point.

18. Use of the orientation indicator according to claims 9 to 16 for determining the distance and/or position of target points not directly visible, wherein the orientation indicator is indirectly positioned at the target point.

19. Use of the method according to claims 1 to 8 for automatic machine control, wherein the orientation of a machine to be controlled is determined through the orientation indicator attached to the machine.

20. Use of the orientation indicator according to claims 9 to 16 for automatic machine control, wherein the orientation indicator is attached to a machine which is to be controlled.

## Revendications

1. Procédé pour la détermination de l'orientation d'un indicateur d'orientation,
au moyen
□ d'un appareil de mesure (1), notamment un tachéomètre, doté d'un système de mesure de distance (12) et d'un système d'acquisition d'image (13) et
□ d'un indicateur d'orientation, positionnable indirectement ou directement en un point cible et présentant au moins trois zones réfléchissantes (4', 4", 4''', 6, 6', 6", 6''', 6'''', 7, 8), qui sont conçues et disposées de manière
- à posséder une relation géométrique mutuelle détectable, et
- à pouvoir être résolues simultanément au moyen du système d'acquisition d'image (13),
**caractérisé en ce que**
□ une zone réfléchissante servant à la mesure de distance peut être distinguée des autres zones réfléchissantes indépendamment de la position relative mutuelle des zones réfléchissantes,
□ il est émis, de l'appareil de mesure (1) vers l'indicateur d'orientation, simultanément et de manière dirigée
- un faisceau collimaté (2) destiné à la mesure au moyen du système de mesure de distance (12) et
- un faisceau divergent (3) destiné à l'acquisition au moyen du système d'acquisition d'image (13),
les deux faisceaux (2, 3) se distinguant par leur longueur d'onde et/ou leur polarisation, et
□ le faisceau collimaté (2') réfléchi et/ou dispersé par les zones réfléchissantes et le faisceau divergent (3') réfléchi et/ou dispersé par les zones réfléchissantes sont captés simultanément ; la détermination, au moyen du système de mesure de distance (12), de la distance entre l'appareil de mesure (1) et au moins ladite zone réfléchissante (4', 4", 4''', 6, 6', 6", 6''', 6'''', 7, 8) servant à la mesure de distance étant simultanée avec la détermination, au moyen du système d'acquisition d'image (13), de la position dans l'espace des au moins trois zones réfléchissantes (4', 4", 4''', 6, 6', 6", 6''', 6'''', 7, 8), ce qui permet d'établir l'orientation de l'indicateur d'orientation.

2. Procédé selon la revendication 1, **caractérisé en ce que** le faisceau divergent (3) présente une divergence équivalente au champ visuel du système d'acquisition d'image (13) et supérieure au champ visuel du système de mesure de distance (12).

3. Procédé selon la revendication 1 ou 2, **caractérisé en ce que** les faisceaux (2, 3) émis, le système de mesure de distance (12) et le système d'acquisition d'image (13) sont coaxiaux.

4. Procédé selon l'une des revendications précédentes, **caractérisé en ce que** l'indicateur d'orientation est positionné en un point cible, et la distance par rapport audit point cible est obtenue à partir de l'orientation de l'indicateur d'orientation et de sa relation géométrique au point cible.

5. Procédé selon la revendication 1, 2 ou 3, **caractérisé en ce que** la distance par rapport à au moins une zone réfléchissante (4' ,4", 4''', 6, 6', 6", 6'', 6'''', 7, 8) et la direction spatiale des au moins trois zones réfléchissantes (4', 4", 4''', 6, 6', 6", 6''', 6'''', 7, 8) sont déterminées simultanément, ce qui permet d'établir l'orientation et la position de l'indicateur d'orientation.

6. Procédé selon la revendication 5, **caractérisé en ce que** l'indicateur d'orientation est positionné en un point cible, et la position dudit point cible est obtenue à partir de l'orientation et de la position de l'indicateur d'orientation et de sa relation géométrique au point cible.

7. Procédé selon l'une des revendications précédentes, **caractérisé en ce que** des filtres sont affectés aux zones réfléchissantes (4', 4", 4''', 6, 6', 6", 6''', 6'''', 7, 8) et/ou aux capteurs.

8. Procédé selon la revendication 7, **caractérisé en ce que** la mesure au moyen du système de mesure de distance (12) est neutralisée pour au moins une zone réfléchissante.

9. Indicateur d'orientation positionnable indirectement ou directement en un point cible,
présentant
▪ au moins trois zones réfléchissantes (4', 4", 4"', 6, 6', 6", 6"', 6"", 7, 8) conçues et disposées de manière
- à posséder une relation géométrique mutuelle détectable,
- à pouvoir être résolues simultanément au moyen d'un système d'acquisition d'image (13), et
- à permettre une mesure simultanée d'une distance à une zone réfléchissante (4', 4", 4''', 6, 6', 6", 6''', 6'''', 7, 8) au moyen d'un système de mesure de distance (12),
**caractérisé en ce que**
▪ les zones réfléchissantes sont conçues de manière que la zone réfléchissante servant à la mesure de distance peut être distinguée des autres zones réfléchissantes indépendamment de la position relative mutuelle des zones réfléchissantes.

10. Indicateur d'orientation selon la revendication 9, **caractérisé en ce qu'**au moins une zone réfléchissante (4', 4", 4''', 6, 6', 6", 6''', 6'''', 7, 8) se distingue des autres zones réfléchissantes (4', 4", 4''', 6, 6', 6", 6''', 6'''', 7, 8) par sa taille.

11. Indicateur d'orientation selon la revendication 9, **caractérisé en ce que** toutes les zones réfléchissantes (4', 4", 4"', 6, 6', 6", 6"', 6"", 7, 8) se distinguent les unes des autres par leur taille.

12. Indicateur d'orientation selon l'une des revendications 9 à 11, **caractérisé en ce qu'**un filtre (20a, 20b) est affecté à au moins une zone réfléchissante (4', 4", 4''', 6, 6', 6", 6''', 6'''', 7, 8), en étant notamment placé devant elle.

13. Indicateur d'orientation selon l'une des revendications 9 à 12, **caractérisé en ce qu'**au moins une zone réfléchissante (4', 4", 4''', 6, 6', 6", 6''', 6'''', 7, 8) est conçue sous une des formes suivantes :
- un réflecteur 360°,
- un réflecteur sphérique (6, 6', 6", 6''', 6''''),
- un réflecteur 360° cylindrique (7),
- un prisme triple (8).

14. Indicateur d'orientation selon l'une des revendications 9 à 13, **caractérisé en ce qu'au** moins une zone réfléchissante (4', 4", 4''', 6, 6', 6", 6''', 6'''', 7, 8) présente un des éléments suivants :
- un film réfléchissant,
- des prismes triples,
- des microlentilles.

15. Indicateur d'orientation selon l'une des revendications 9 à 14, **caractérisé en ce que** les zones réfléchissantes (4', 4", 4''', 6, 6', 6", 6''', 6'''', 7, 8) sont reliées entre elles par une unité de liaison, notamment des tringles, et sont disposées par exemple en forme d'étoile.

16. Indicateur d'orientation selon l'une des revendications 9 à 15, **caractérisé en ce que** l'indicateur d'orientation est affecté à un support de réflecteur (5), notamment une canne.

17. Utilisation du procédé selon l'une des revendications 1 à 8 pour déterminer la distance et/ou la position de points cibles non directement visibles au moyen d'un positionnement indirect de l'indicateur d'orientation au point cible.

18. Utilisation de l'indicateur d'orientation selon l'une des revendications 9 à 16 pour déterminer la distance et/ou la position de points cibles non directement visibles au moyen d'un positionnement indirect de l'indicateur d'orientation au point cible.

19. Utilisation du procédé selon l'une des revendications 1 à 8 pour le pilotage automatique d'une machine, par la détermination d'une orientation d'une machine à piloter au moyen de l'indicateur d'orientation fixé sur celle-ci.

20. Utilisation de l'indicateur d'orientation selon l'une des revendications 9 à 16 pour le pilotage automatique d'une machine, ledit indicateur d'orientation étant fixé sur une machine à piloter.
